# EUROPEAN PATENT APPLICATION

(11) **EP 1 987 938 A1**
(43) Date of publication of application: **05.11.2008**
(21) Application number: 07107503.0
(22) Date of filing: 04.05.2007
(51) Int. Cl.: B29C 45/16, B65D 1/24

(54) **Crate**

(71) Applicant: D.W. PLASTICS N.V., 3740 Bilzen (BE)
(72) Inventor: Brouwers, Werner Christiaan Martin, 3990 Kleine-Brogel (BE); Willems, Gert Louis Clement, 3060 Bertem (BE)
(74) Representative: van Westenbrugge, Andries

(57) **Abstract**

The invention relates to an injection moulded crate comprising a bottom part and walls, said crate comprising a first crate section (1) injection moulded using a first synthetic material and a second crate section (6) subsequently injection moulded over at least a part of said first crate section (1) using a second synthetic material. This crate is characterised in that the first crate section (1) has at least one embossed indication (2) protruding from its surrounding crate surface, and the second synthetic material forms a layer surrounding the at least one indication at a distance from said at least one indication and having a surface (b) generally below the surface (c) of said at least one embossed indication.
The invention further provides a method for producing a crate.

## Description

### Background

The present invention relates to a crate to an injection moulded crate and a method for producing an injection moulded crate.

It is well known in the art to make crates from synthetic material using injection moulding techniques. A well known problem in this field is to produce a crate having an indication, such as characters, text or other logos, on a wall of such a crate. In particular, these indications when representing for instance brand names, need to look very taut and well defined. Furthermore, these items need to be very scratch-proof and must not be damaged in use. In particular, in crates used for bottles for instance, these scratch and damage resistance has to meet very high standards.

Well known techniques for applying logos, brand names on a wall of a crate is to use inmould labeling. In that technique, a printed label is placed inside a mould cavity against a wall of the mould before injection moulding. A disadvantage of this technique is that these inmould labels are expensive, they need handling and positioning in a mould, and need to attach to the mould wall.

An other well known technique is to paint or print the letters or characters in order to produce these brand names or logos. A disadvantage of this technique is that it is time consuming and the paint needs to dry. Furthermore, paint layers or printed layers may easily get damaged or get scratched.

An other well known technique is to use letters or characters or logos or to use letters, characters or logos, which are indented or embossed with respect to the surface of a wall. A disadvantage of this technique is that it is not possible to make these logos or characters or brand names in a colour which differs from the colour of the crate.

A well known technique in moulding crates is so-called two-component moulding or overmoulding. In this technique, a large part of the crate is first moulded in a first moulding cavity using a first synthetic material, often HDPE, polypropylene or the like. In a next production step, this crate section is positioned in a second mould. This second mould has walls which leave part of the walls of the crate section free, thus creating a moulding cavity bounded by mould walls and the surface of the crate section. Using a second synthetic material, often a thermoplastic elastomeric polymer, a part of the surface of the crate section is covered, for instance for forming soft grip handles. A well known technique for preventing synthetic material at the boundary to accidentally blend is surrounding the area to be overmoulded using a groove around this area in the crate section, or to provide the crate section with a lip or joggle around this area. When placing the injection moulded crate in the second mould, the wall of the mould should lay against these lips or extend in these grooves and thus seal the area to be overmoulded. This technique, however, is up to now only suited and used for two component moulding or overmoulding of large areas in relatively thick layers, mostly using elastomeric polymers. In this way, for instance soft grips are formed on bottle crates. Tests have shown that so-called bleeding, where one of the synthetic materials partly mixes with the other one, may pose a problem.

### Summary of the invention

The invention aims to provide a new method for providing a crate with characters such as brand names or logos to the wall of a crate.

To that end, the invention provides an injection moulded crate comprising a bottom part and walls, said crate comprising a first crate section injection moulded using a first synthetic material and a second crate section subsequently injection moulded over at least a part of said first crate section using a second synthetic material. This injection moulded crate is characterised in that the first crate section has at least one embossed indication protruding from its surrounding crate surface, and the second synthetic material forms a layer surrounding the at least one indication at a distance from said at least one indication and having a surface generally below the surface of said at least one embossed indication.

The invention further provides a method for injection moulding a crate using synthetic material, comprising the steps of:
- injection moulding a first crate section in a first mould using a first synthetic material, said first crate section having an indication embossed on at least one of its walls;
- providing an second injection mould which comprises a mould wall having said the contour of said indication cut out in said mould wall up to a first depth leaving said mould wall free from the indication and which has a ledge bounding said mirror image of said indication and extending from said mould wall up to a first height defining a second level and a mould cavity forming wall which is at a level between the first and second level;
- positioning said first crate part in said second injection mould with said embossed indication within said ledge, and said ledge sealingly pressed against the surface of the crate section, thus forming a moulding cavity which is at least partially bounded by said first crate section, said ledge and said mould wall, and
- injecting a second synthetic material in said moulding cavity.

The invention further provides an injection mould for injection moulding a plastic bottle crate for providing a wall of a crate section with an indication which has a contour, said injection mould comprising a mould wall having the contour of said indication cut out in said mould wall up to a first depth leaving said mould wall free from the indication when a crate section is positioned in said injection mould and thus defining a first level, a ledge bounding said mirror image of said indication and extending from said mould wall up to a first height defining a second level, and a mould cavity forming wall which is at a level between the first and second level.

The invention further provides a method for injection moulding a crate, said method comprises the steps of:
- injection moulding a crate section from a first plastic with an indication embossed on at least one of its walls;
- forming a second mould cavity bounded by at least part of a wall area of said crate section surrounding said indication, a mould wall opposite of said wall area, and a ledge on said mould wall near said embossed indication and extending up to said surface of said crate section in a sealing way;
- injecting a second plastic into the second mould cavity.

This method provides the possibility of producing a crate having indications like a brand name or a logo on a wall of a crate. In particular, it makes it possible to provide indications in a colour which contrasts with the colour of the further crate. Furthermore, it makes it possible to provide an indication which is embossed (or protrudes or stands out) with respect to the surrounding surface.

Tests have been done by the applicant, using the overmoulding technique discussed above in the following way in order to try to find a new way of providing a wall or a crate with an indication. In these tests, first characters were embossed on a crate section which was moulded first. Subsequently, This crate section was placed in a second mould in which the wall of the mould pressed against the embossed characters and a second synthetic material was injected in order to flow around the embossed characters. This resulted in bleeding, and overflow of second synthetic material over the characters.

Using the method of the invention, it proved to be possible to provide crates with a new type of indications. For instance, when using a different colour of plastic, the letters would visually stand out against the background. It proved also possible to provide the wall of a crate with letters of a different colour which stand out (or which are embossed) with respect to the surface of the second synthetic material. This indication can be as scratch resistant and have all the beneficial properties of the further surface of the crate.

Furthermore, it proved possible to use the same or comparable material, which makes this crate recyclable in its entirety.

Furthermore, the crate can be produced economically and provides a durable crate with new aesthetic possibilities.

Further embodiments of the inventions are described in the dependent claims. The features of these dependent claims may independently serve as a basis for a divisional filing.

The various aspects discussed in this patent can be combined in order to provide additional advantages.

### Description of the drawings

The invention will be further elucidated referring to an preferred embodiment shown in the drawing wherein shown in:
Fig. 1a a view of a crate having an indication;
Fig. 1b a detail of the indication of fig. 1 before the overmoulding step;
fig. 2 a cross section of a crate section in a second mould;
Figure 3 a front view of the character of figure 1, overmoulded using a second synthetic material.

### Detailed description of embodiments

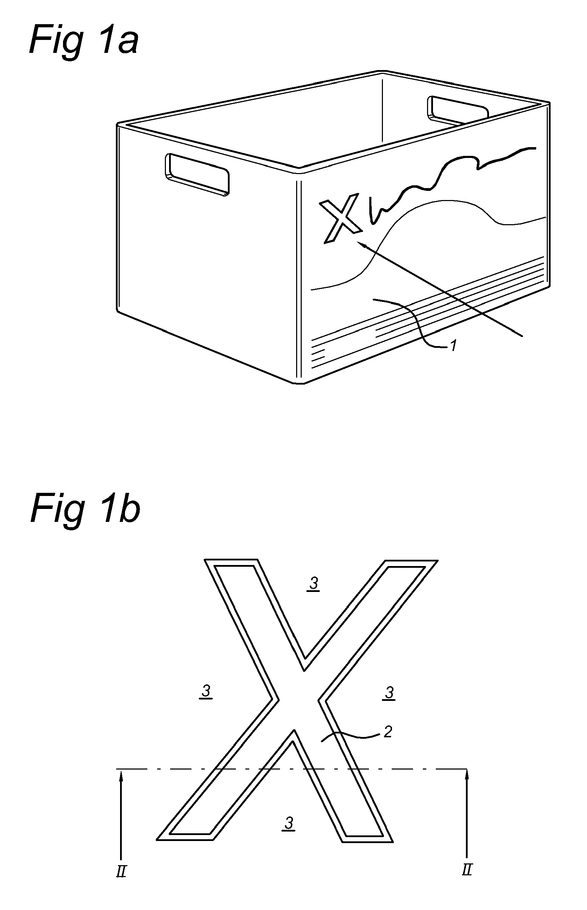

Fig. 1a shows a crate section 1 after the first mould step, with the embossed indication.

Fig. 1b shows a part of a crate wall with a general crate surface 3 with embossed the character "X" indicated with reference numeral 2. This character thus stand out with respect to its surrounding, or projects from its surrounding surface. In the figure, a dotted line indicates the position of a cross section discussed later.

In the method according to an aspect of the invention, a first crate part is moulded using a first synthetic material, usually a polyolefin, such as polypropylene or HDPE. This material is injection moulded in a mould. The crate usually has a bottom wall and four side walls attached to one another and the bottom in order to form a crate, for example for bottles, such as beer bottles.

Embossed on a side wall of the crate, the character is provided, usually by providing the moulding wall with an indented or cut-out part, which is a mirror image of the character or the logo which needs to be represented. In this method, the surface of the indication does not need to be planar.

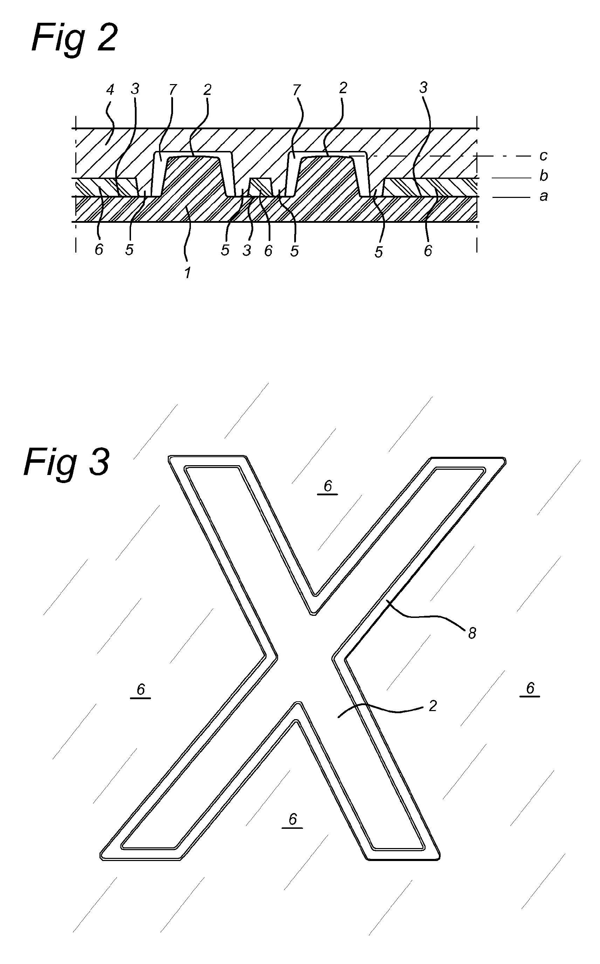

Figure 2 shows a cross section, at a position indicated in figure 1 in dotted lines, of a part of the crate section produced in an earlier injection moulding step positioned in a second mould. Shown in figure 2 is part of the wall of the first section of the crate 1. this first wall part of the crate 1 has a general surface 3 and has embossed parts 2 of the character, which protrude from the general surface 3 of the crate part or crate section. The general surface level of the crate section is indicated by the reference letter a. The general surface level of the embossed parts 2 are indicated with a general level c.

Against the wall 3 of the crate section, a mould part 4 is applied. This wall of the mould has portions 5 which extends up and against the general surface 3 of the crate section and which are pushed against this surface with a force so that it, for a very small part, indents into these wall sections, just enough to provide a good sealing. It is not needed to actually penetrate the surface for providing a sealing groove which would disturb the smooth surface. The pressure should be just enough to provide a sealing for preventing the second synthetic material from entering space 7.

Between the wall of the mould and the surface 3 of the crate a moulding cavity 6 is thus created. Into this mould cavity a further synthetic material is injected. The general level of this mould wall is indicated with reference character b. The second synthetic material, usually also HDPE or other polymeric material which attaches onto the surface of the already moulded part, usually has a different colour than the first moulded crate part 1. This will make the indication 2 visually stand out.

Around the embossed character 2, the mould has indented mould parts 7, which leave these parts free. As the ledge parts 5 of the mould form a seal, this part forming space 7 will not be provided with a second synthetic material and will remain free of the second synthetic material. To that end, the wall of the mould will have a mirror image of the indication cut, and it will be surrounded by a lip or ledge. The parts of the mould wall which form part of the boundary of the second mould cavity will be at a level b below the general wall level a, and the mirror image in turn will be below the that level b.

Generally, the wall thickness of an injection moulded crate will be about 1.5-3 mm, in particular about 2.5 mm. The overmoulded layer will generally have about the same thickness as the wall of the earlier formed crate section 1. In particular, however, better results have been achieved with overmould layers which are thinner than the thickness of the wall. In particular, the overmould layer is about 0.5-2 mm, preferably about 0.5-1.5 mm. This will reduce stress between the layers.

Figure 3 shows the character 2 after the second moulding step was completed. The character 2 will have the same colour as the original moulded part and a very small space 8 around the character 2 will be left free. Around this free space and the character, the second synthetic material 6, which differs from the colour of the first moulded section, will be formed. The character 2 will extend beyond the surface of the second moulded material. With this method, which will be clear from figure 2, it is also possible to have a non-flat surface of the first moulded part, indicated of the embossed part 2. In this way, for instance logos can be embossed on the surface of a crate and surrounded by further synthetic material in a contrasting colour for instance.

In the method of the invention, good results were achieved with synthetic material which was of the same type as the first synthetic material, for instance HDPE or polypropylene.

The indication, as mentioned above, can be a logo or brand name. These indications are usually provided on one or more outside walls of a bottle crate. The indications are usually at least several centimetres up to 20 cm in height.

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Injection moulded crate comprising a bottom part and walls, said crate comprising a first crate section injection (1) moulded using a first synthetic material and a second crate section (6) subsequently injection moulded over at least a part of said first crate section using a second synthetic material, **characterised in that** the first crate section (1) has at least one embossed indication (2) protruding from its surrounding crate surface (3), and the second synthetic material forms a layer (6) surrounding the at least one indication (2) at a distance from said at least one indication (2) and having a surface (b) generally below the surface (c) of said at least one embossed indication.

2. Injection moulded crate according to claim 1, wherein at least part the surface of said embossed indication extend above the surface of the second synthetic material, preferably as a non-planar surface.

3. Injection moulded crate according to claim 1 or 2, wherein the second synthetic material is of the same type as the first synthetic material.

4. Injection moulded crate according to claim 1 or 2, wherein the second synthetic material and the first synthetic material comprise thermoplastic polymers, preferably polyolefin, specifically HDPE or polypropylene.

5. Injection moulded crate according to any one of the preceding claims, wherein said embossed indication protrudes up to 2 mm above the surface of the second synthetic material, and preferably said layer of second synthetic material is about 0.5-2 mm thick.

6. Injection moulded crate according to any one of the preceding claims, wherein said layer of second synthetic material commences less than 1 mm from the indication.

7. Method for injection moulding a crate using synthetic material, comprising the steps of:
- injection moulding a first crate section in a first mould using a first synthetic material, said first crate section having an indication embossed on at least one of its walls;
- providing an second injection mould which comprises a mould wall having said the contour of said indication cut out in said mould wall up to a first depth leaving said mould wall free from the indication and which has a ledge bounding said mirror image of said indication and extending from said mould wall up to a first height defining a second level and a mould cavity forming wall which is at a level between the first and second level;
- positioning said first crate part in said second injection mould with said embossed indication within said ledge, and said ledge sealingly pressed against the surface of the crate section, thus forming a moulding cavity which is at least partially bounded by said first crate section, said ledge and said mould wall, and
- injecting a second synthetic material in said moulding cavity.

8. Injection mould for injection moulding a plastic bottle crate for providing a wall of a crate section with an indication which has a contour, said injection mould comprising a mould wall having the contour of said indication cut out in said mould wall up to a first depth leaving said mould wall free from the indication when a crate section is positioned in said injection mould and thus defining a first level, a ledge bounding said mirror image of said indication and extending from said mould wall up to a first height defining a second level, and a mould cavity forming wall which is at a level between the first and second level.

9. Method for injection moulding a crate, said method comprises the steps of:
- injection moulding a crate section from a first plastic with an indication embossed on at least one of its walls;
- forming a second mould cavity bounded by at least part of a wall area of said crate section surrounding said indication, a mould wall opposite of said wall area, and a ledge on said mould wall near said embossed indication and extending up to said surface of said crate section in a sealing way;
- injecting a second plastic into the second mould cavity.

10. Injection moulded crate comprising one or more of the characterising features described in the description and/or shown in the attached drawings.

11. Method comprising one or more of the characterising features described in the description and/or shown in the attached drawings.
